# EUROPÄISCHE PATENTSCHRIFT

(11) **EP 0 699 493 B1**
(45) Veröffentlichungstag und Bekanntmachung des Hinweises auf die Patenterteilung: **30.09.1998**
(21) Anmeldenummer: 95250164.1
(22) Anmeldetag: 05.07.1995
(51) Int. Cl.: B23B 41/02

(54) **Spanabhebende Werkzeugmaschine**
Chip forming machine tool
Machine d'usinage par enlèvement de copeaux

(30) Priorität: 06.07.1994 DE 4425603
(43) Veröffentlichungstag der Anmeldung: 06.03.1996
(73) Patentinhaber: Otto Häfner GmbH & Co. KG, 22045 Hamburg (DE)
(72) Erfinder: Schütte, Karsten, Dipl.-Ing., D-29596 Stadensen (DE); Friehe, Jens, Dipl.-Ing., D-22145 Hamburg (DE)
(74) Vertreter: Wenzel, Heinz-Peter, Dipl.-Ing.

(56) Entgegenhaltungen:
- EP-A- 0 229 909
- DE-U- 9 307 758
- PATENT ABSTRACTS OF JAPAN vol. 12 no. 142 (M-692) [2989] ,30.April 1988 & JP-A-62 264813 (HONDA MOTOR CO LTD) 17.November 1987,

## Beschreibung

Die Erfindung betrifft eine spanabhebende Werkzeugmaschine zum mechanischen Bearbeiten von Werkstücken, durch Tieflochbohren, Fräsen, Bohren, Gewindeschneiden, Reiben od.dgl., umfassend eine über eine Spanneinrichtung ein Werkzeug direkt und/oder indirekt aufnehmende in einem Spindelstock gelagerte Spindel und ein Aufnahmelager mit einer Bohrung für eine ggf. von einem Bohrbuchsenhalter getragenen Bohrbuchse und/oder eine Späneschleuse. Ferner betrifft die Erfindung Bohrbuchsenträgermittel zur Verwendung in einer einen Spindelstock und eine Spindel mit Spanneinrichtung umfassenden spanabhebenden Werkzeugmaschine, umfassend ein Aufnahmelager zur Aufnahme eines Bohrbuchsenhalters mit Bohrbuchse und/oder einer Späneschleuse sowie einen Schlitten, wobei das Aufnahmelager im Endbereich des Schlittens angeordnet ist.

Eine Werkzeugmaschine in Form einer Tieflochbohrmaschine gemäß dem Oberbegriff des Anspruches 1 ist bekannt (DE-GM 93 07 758.0), wobei ein zum Tieflochbohren erforderlicher Bohrbuchsenträger, der die erforderliche Maßgenauigkeit durch entsprechende Führung des Tieflochbohrers gewährleistet, bei der Durchführung von anderen konventionellen Bearbeitungsarten, wie z.B. Fräsen, aus dem Bereich des das Werkzeug aufnehmenden Bauteils geschwenkt wird. Die diese Verschwenkung realisierenden zusätzlichen Bauelemente erhöhen den Herstellungsaufwand für die Tieflochbohrmaschine insgesamt. Bei der Verschwenkbewegung des Bohrbuchsenträgers ist zudem eine Maßabweichung in der Endstellung beim Zurückschwenken in die Arbeitsposition zum Tieflochbohren hinzunehmen, da die vormalige Position nicht absolut exakt erreicht werden kann. Dies ist für hohe Maßhaltigkeit erfordernde Bearbeitungen nicht zufriedenstellend. Weiterhin stellen die für eine Verschwenkung vorgesehenen Bauelemente eine Störfaktor dar und erschweren die Werkzeugwechselvorgänge, so daß die Handhabung insgesamt recht kompliziert ist.

Eine weitere, aus der EP-A-0 229 909 bekannte Werkzeugmaschine mit Bohrbuchsenträgermitteln gemäß dem Oberbegriff des Anspruches 9 umfaßt ebenfalls eine Spindel und eine Bohrbuchseneinheit zum Tieflochbohren. Die Bohrbuchseneinheit ist auswechselbar in einer zweiten, im Bohrbuchsenträger drehbar gelagerten Arbeitsspindel angeordnet, so daß die Bohrbuchseneinheit selbst gegen andere Werkzeuge zum Fräsen, für normales Bohren od. dgl. ausgewechselt werden kann, die dann über die Zweite Arbeitspindel angetrieben werden.

Demgegenüber liegt der Erfindung die Aufgabe zugrunde, eine spanabhebende Werkzeugmaschine zu schaffen, die sich durch verbesserte Handhabung gegenüber bekannten Werkzeugmaschinen auszeichnet und eine hohe Maßgenauigkeit und Steife für alle denkbaren Bearbeitungsvorgänge gewährleistet.

Diese Aufgabe wird bei einer spanabhebende Werkzeugmaschine gemäß dem Oberbegriff des Anspruches 1 dadurch gelöst, daß das Aufnahmelager parallel zum Bearbeitungsvorschub und mindestens teilweise über die Spanneinrichtung der Spindel verfahrbar ausgebildet ist derart, daß die Spanneinrichtung die Bohrung des Aufnahmelagers mindestens teilweise durchtauchen kann. Damit wird in Erfüllung der Aufgabenstellung eine Werkzeugmaschine geschaffen, bei der das Werkzeug einfach und schnell ausgewechselt werden kann, ohne daß Maßabweichungen zwischen der Achse des Aufnahmelagers und der des Werkzeuges auftreten können, da das Aufnahmelager für den Bohrbuchsenhalter bzw. Späneschleuse immer und nur koaxial zum Werkzeug geführt wird. Da die Umrüstzeit sich auf das Zurückfahren des Aufnahmelagers und Einspannen des neuen Werkzeuges beschränkt, was ggf. sogar automatisch erfolgen kann, kann die Werkzeugmaschine mit extrem kurzen Umrüstzeiten von z.B. einer Tieflochbohrmaschine, die am Werkstück die zusätzliche Führung des Werkzeugs in einer Bohrbuchse benötigt, in eine Fräsmaschine ohne Aufnahmelager umgewandelt werden. Durch diese schnelle Umrüstmöglichkeit ist es weiterhin möglich, daß zum Anbohren ein konventioneller Bohrer verwendet werden kann, so daß das Einbringen eines

Bohrbuchsenhalters in das Aufnahmelager zur Durchführung von Tieflochbohrungen u.U. entfallen kann, da die Führungs- bzw. Pilotbohrung die erforderlichen Führungsaufgaben übernehmen kann. Vorteilhaft kann der Durchmesser des Aufnahmelagers dabei so dimensioniert sein, daß der werkstückseitige Endbereich des Spindelstockes, also die Spindelstocknase, durch die Bohrung mindestens teilweise durchtauchen kann.

Zweckmäßig kann das Aufnahmelager im werkstückseitigen Endbereich eines parallel zum Bearbeitungsvorschub verfahrbar gelagerten Schlittens angeordnet sein. Somit wird das Aufnahmelager bei sämtlichen Bewegungen des Spindelstockes bzw. der Pinole koaxial mitgeführt. Diese Maßnahme ist besonders zweckmäßig, wenn die Werkzeugmaschine als Koordinatenmaschine ausgebildet ist.

Ein besonders stabile Ausführung der Werkzeugmaschine wird dadurch erreicht, daß der Spindelstock vertikal verfahrbar auf einem auf einem Maschinengestell angeordneten Turm angeordnet ist, der, den Bearbeitungsvorschub realisierend, in Richtung der Achse des Werkzeuges verfahrbar mit dem Maschinengestell wirkverbunden ist. Damit ist eine Pinole oder ein entsprechendes äquivalentes Bauelement wie z.B. die Spindeleinheit der GM 93 07 758.0 nicht mehr erforderlich. Es können je nach dem benutzten Bearbeitungswerkzeug besonders kurze Abstände zwischen Führung und Werkstück realisiert werden. Dies hat eine hohe Steifigkeit des Gesamtsystems zur Folge, so daß höchstmögliche Maßgenauigkeit gewährleistet und zudem eine erhöhte Zerspanungsleistung die Folge ist. Durch den Wegfall der Pinole ist die erfindungsgemäße Tieflochbohrmaschine zudem besonders fertigungsgünstig herstellbar.

Vorteilhafterweise kann der Turm als Portal oder Rahmen ausgebildet sein, in dessen Mittenbereich der vertikal verfahrbare Spindelstock mit dem Schlitten und dem Aufnahmelager angeordnet ist, wobei die Führungen für den Spindelstock an den zum Werkstück weisenden Flächen angeordnet sind. Dadurch werden auftretende Bearbeitungskräfte zentral und symmetrisch aufgenommen. Zusätzlich ist die Zugänglichkeit zum Bearbeitungsbereich auch dann problemlos möglich, wenn schräg anzusetzende Bohrungen in das Werkstück eingebracht werden sollen.

Bei einer weiteren Ausführungsform der Erfindung kann der Spindelstock als in einem Pinolenstock gelagerte Pinole ausgebildet sein, wobei das werkstückseitige Endteil der Pinole mindestens teilweise durch die Bohrung des Aufnahmelagers durchtauchen kann. Dabei wird der Bearbeitungsvorschub durch die Pinole realisiert.

Die Werkzeugmaschine kann als Koordinatenmaschine ausgebildet sein, so daß auf jeder Werkstückseite die Positionen angefahren werden können und mittels Drehtisch eine nahezu allseitige Bearbeitung des Werkstückes möglich ist.

Die oben genannte Aufgabe wird bei Bohrbuchsenträgermitteln zur Verwendung in einer spanabhebenden Werkzeugmaschine gemäß dem Oberbegriff des Anspruches 9 erfindungsgemäß dadurch gelöst, daß der Schlitten derart an der Werkzeugmaschine anbringbar ist, daß das Aufnahmelager parallel zum Bearbeitungsvorschub über die Spanneinrichtung der Spindel hinweg verfahrbar ist, so daß die Spanneinrichtung das Aufnahelager mindestens teilweise durchtaucht.

Nach dieser weiteren Ausführung der Erfindung kann zu Nachrüstungs - wie auch zu Mehrfachverwendungszwecken, also z.B. auf mehreren Maschinen nacheinander, das Aufnamelager mit dem Schlitten vorteilhafterweise als separate Einheit hergestellt und geliefert werden.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigen
- Fig. 1: eine Draufsicht auf eine erste Ausführung der erfindungsgemäßen spanabhebenden Werkzeugmaschine mit einem eingespannten Tieflochbohrer, der in einem Aufnahmelager mittels Bohrbuchsenhalter und Bohrbuchse zusätzlich geführt ist,
- Fig. 2: die Werkzeugmaschine entsprechend Fig. 1 während des Tieflochbohrens,
- Fig. 3: eine Draufsicht auf die erfindungsgemäße Werkzeugmaschine nach Fig. 1 mit einzusetzendem Fräs-Werkzeug und zurückgefahrenem Schlitten, so daß das Aufnahmelager mit seiner freien Bohrung über die Spindelstocknase gefahren ist,
- Fig. 4: eine Draufsicht der erfindungsgemäßen Werkzeugmaschine nach Fig. 1 mit eingespanntem Fräser,
- Fig. 5: eine Werkzeugmaschine entsprechend Fig. 4 mit teilweise vorgefahrenem Turm,
- Fig. 6: eine Draufsicht auf eine zweite Ausführung einer erfindungsgemäßen spanabhebenden Werkzeugmaschine mit einem eingespannten Tieflochbohrer, der zusätzlich in einem Aufnahmelager mittels Bohrbuchsenhalter und Bohrbuchse geführt ist,
- Fig. 7: die Werkzeugmaschine entsprechend Fig. 6 während des Tieflochbohrens,
- Fig. 8: eine Draufsicht auf die erfindungsgemäße Werkzeugmaschine nach Fig. 6 mit einzusetzendem Fräs-Werkzeug und zurückgefahrenem Schlitten, so daß das Aufnahmelager mit seiner freien Bohrung über das Endteil der Pinole gefahren ist,
- Fig. 9: eine Draufsicht der Werkzeugmaschine nach Fig. 6 mit eingespanntem Fräser und
- Fig. 10: eine Werkzeugmaschine entsprechend Fig. 9 mit teilweise vorgefahrener Pinole.

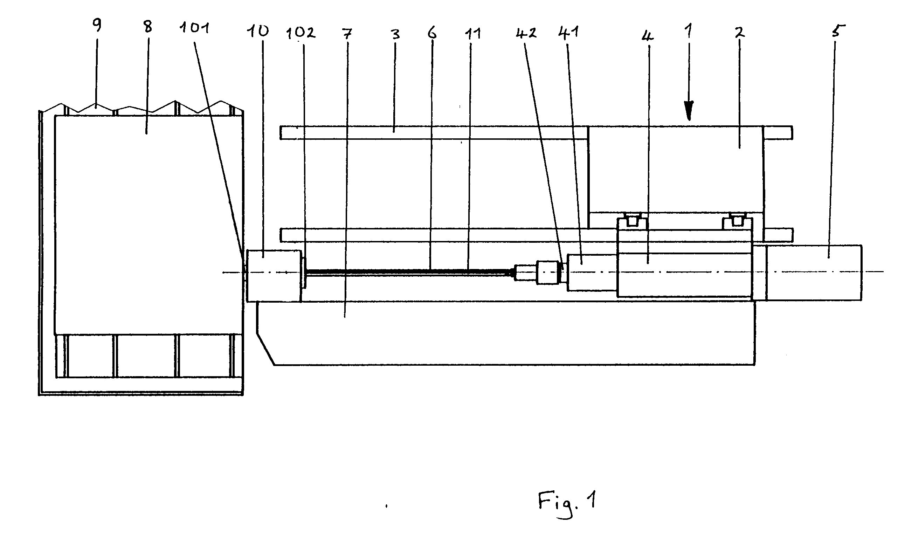

Eine in Fig. 1 in Draufsicht dargestellte Tieflochbohrmaschine 1 umfaßt einen Turm 2, der in Richtung zum Bearbeitungsvorschub beim Tieflochbohren verfahrbar auf einem Maschinengestell 3 geführt ist. Am Turm 2 ist vertikal verfahrbar ein Spindelstock 4 angeordnet. Eine Spindel 42 im Spindelstock 4 ist in allgemein üblicher und bekannter Art und Weise mit einem Antrieb 5 zur Erzeugung der erforderlichen Drehbewegung eines Werkzeuges 6 gekoppelt. Weiterhin umfaßt die Spindel 42 eine Spanneinrichtung für das aufzunehmende Werkzeug 6. Die Tieflochbohrmaschine 1 weist zusätzlich einen gegenüber Turm 2 und Spindelstock 4 verfahrbaren Schlitten 7 auf, an dessen dem zu bearbeitenden Werkstück 8 zugewandtem Endbereich ein Aufnahmelager 10 angeordnet ist. Das zu bearbeitende Werkstück 8 ist auf einem allgemein bekannten Aufspanntisch 9 gespannt. Das Aufnahmelager 10 ist mit einer Bohrung versehen, in der eine Bohrbuchse mittels Bohrbuchsenhalter 101 und/oder eine Späneschleuse 102 od.dgl. Bauelemente lagerbar sind. Die Bohrung des Aufnahmelagers 10 ist in ihrem Durchmesser größer als der Durchmesser einer sich im werkstückseitigen Endbereich des Spindelstockes 4 befindlichen Spindelstocknase 41. Entsprechend der Fig. 1 ist in der Spindel 42 ein Tieflochbohrer 11 eingespannt, der zusätzlich über die im Aufnahmelager 10 angeordneten Bauelemente, wie z.B. einem Bohrbuchsenhalter mit Bohrbuchse, geführt wird.

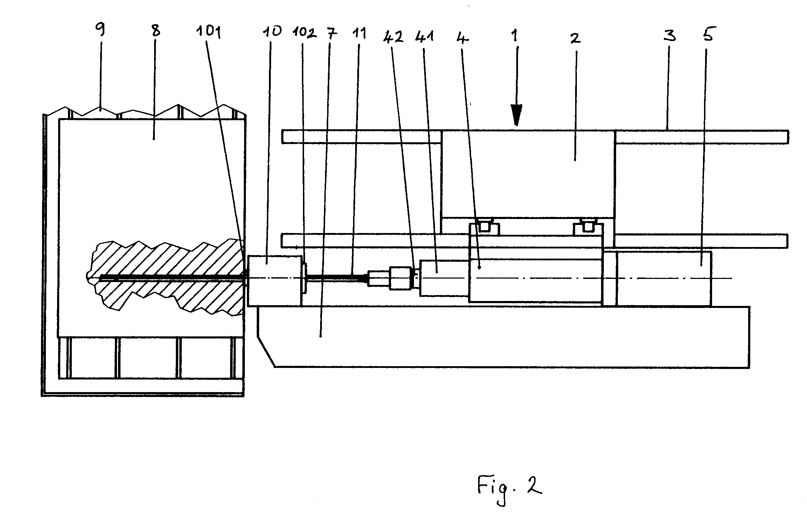

Um das auf dem Aufspanntisch 9 gespannte Werkstück 8 entsprechend Fig. 2 bearbeiten zu können, wird der Turm 2 auf dem Maschinengestell 3 in Achsrichtung des Werkzeuges 6 verfahren. Demzufolge führt der Turm 2 die erforderliche Vorschubbewegung des Werkzeuges 6 aus. Dabei bleibt das Aufnahmelager am Werkstück, während der Spindelstock sich gegenüber dem Schlitten mit der Vorschubbewegung des Turms verschiebt.

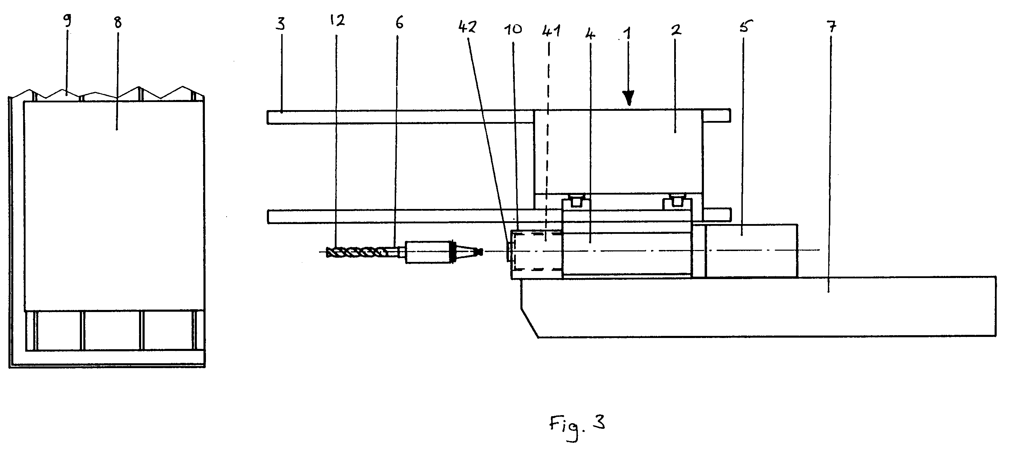

In Fig. 3 ist die erfindungsgemäße Tieflochbohrmaschine 1 zum Einsatz eines Fräs-Werkzeuges 12 vorbereitet. Dazu wurden aus dem Aufnahmelager 10 das/die darin aufgenommene/n Bauelement/e entfernt und der Schlitten 7 so weit gegenüber dem Spindelstock 4 verfahren, daß das Aufnahmelager 10 mit seiner nun freien Bohrung über die Spindelstocknase 41 greift, diese also umschließt, so daß die Spindelstocknase 41 quasi in die Bohrung des Aufnahmelagers 10 eingetaucht und die Spanneinrichtung in der Spindel 42 somit frei zugänglich ist. Nun kann das Fräs-Werkzeug 12 wie bei herkömmlichen Werkzeugmaschinen in die Spanneinrichtung der Spindel 42 eingesetzt werden. Bei dieser Konfiguration der Maschine bleibt das Aufnahmelager fest an der Spindelstocknase 41, und der Schlitten 7 ist stationär gegenüber dem Spindelstock 4 gehalten.

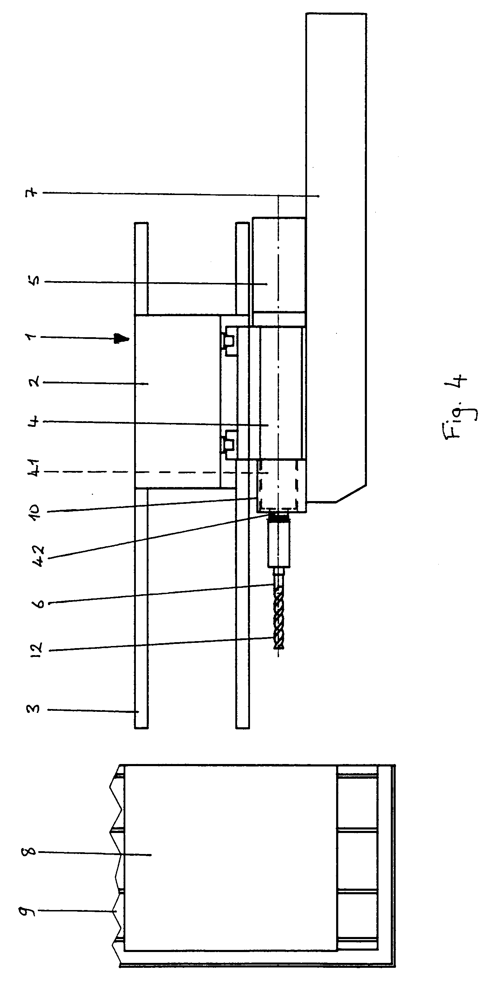

Fig. 4 zeigt die erfindungsgemäße Tieflochbohrmaschine 1 mit eingesetztem Fräs-Werkzeug 12. Dieses kann durch die spezielle Gestaltung der Tieflochbohrmaschine 1 mit gegenüber dem Spindelstock 4 verfahrbarem Schlitten 7 und Eintauchen der Spindelstocknase 41 in das Aufnahmelager 10 des Schlittens 7 sogar automatisch gewechselt werden.

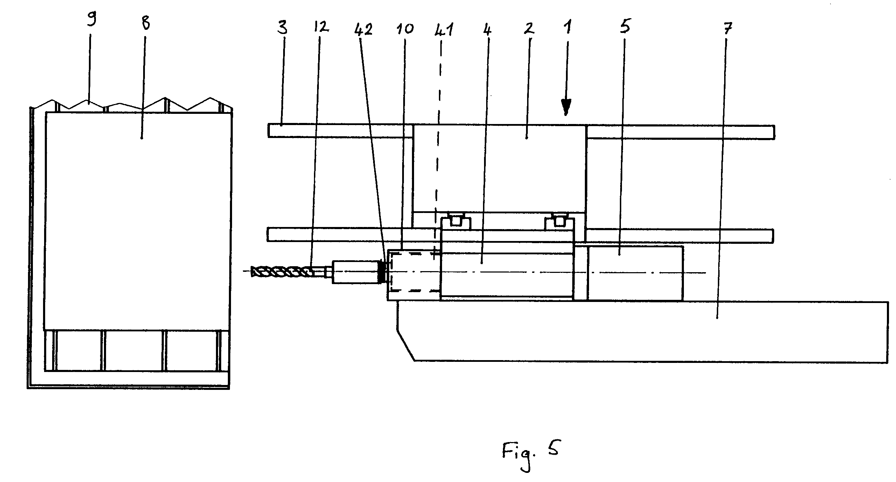

Fig. 5 zeigt den in Richtung zum Werkstück 8 vorgefahrenen Turm 2, so daß bei weiterem Vorfahren des Turmes 2 das Werkstück 8 durch Fräsen bearbeitet werden kann. Dabei kann die Querbewegung über den Aufspanntisch 9 und die senkrechte Bewegung durch den Spindelstock 4 realisiert werden.

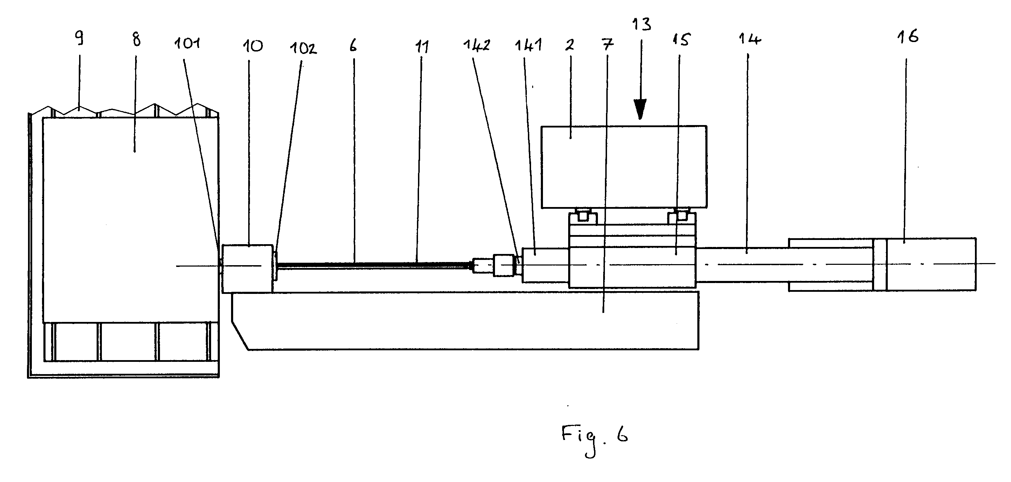

Ein zweites Ausführungsbeispiel der Erfindung ist in Fig. 6 dargestellt. Hier unterscheidet sich die Tieflochbohrmaschine 13 von der der Figuren 1 bis 5 dadurch, daß sie eine in Richtung des Bearbeitungsvorschubs verfahrbare Pinole 14 aufweist, die in einem auf einem gestellfesten Turm 3 vertikal verfahrbar angeordneten Pinolenstock 15 geführt ist. Die in der Pinole 14 gelagerte Spindel 142 ist in allgemein bekannter Weise mit einem Antrieb 16 zur Erzeugung der Drehbewegung eines Werkzeuges gekoppelt. Die Pinole 14 selbst ist in bekannter Weise mit einem nicht gezeigten Antrieb zur Erzeugung des Vorschubs gegenüber dem Maschinengestell 3 gekoppelt. Durch den Einsatz einer Pinole können auch zurückgesetzte sowie ggf. schwer zu erreichende Teile eines Werkstückes, die mit der Tieflochbohrmaschine entsprechend Figuren 1 bis 5 aufgrund des Maschinengestells bzw. des beweglichen Turms nicht zugänglich sind, bearbeitet werden. In dieser Ausführungsform der Erfindung ist der Schlitten 7 des Aufnahmelagers 10 auf dem Pinolenstock 15 derart geführt, daß er demgegenüber parallel verfahrbar ist. Der Durchmesser der Bohrung des Aufnahemlagers 10 ist größer als der der Pinole 14 oder mindestens deren Ende 141, an dem sich die Einspanneinrichtung der Spindel 142 befindet.

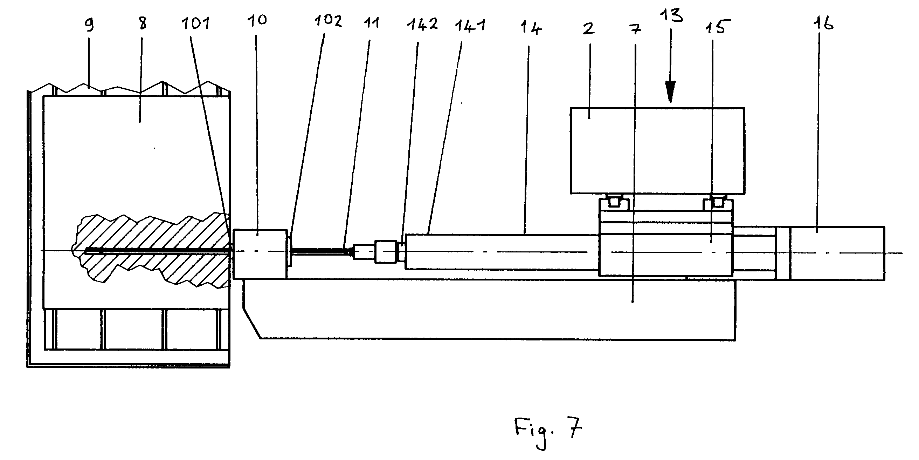

Entsprechend Figuren 6 und 7 ist ein Tieflochbohrer in der Spindel 142 eingespannt. Bei diesem Bearbeitungsverfahren ist das Aufnahmelager 10 mit eingesetztem Bohrbuchsenhalter mit Bohrbuchse 101 und/oder ggf. zusätzlicher Späneschleuse 102 wie bei den Figuren 1 und 2 gegen das Werkstück gedrückt, während die Pinole 14 die Vorschubbewegung realisiert. Bei dieser Konfiguration entsteht keine relative Verschiebung zwischen dem Schlitten 7 und dem Pinolenstock 15.

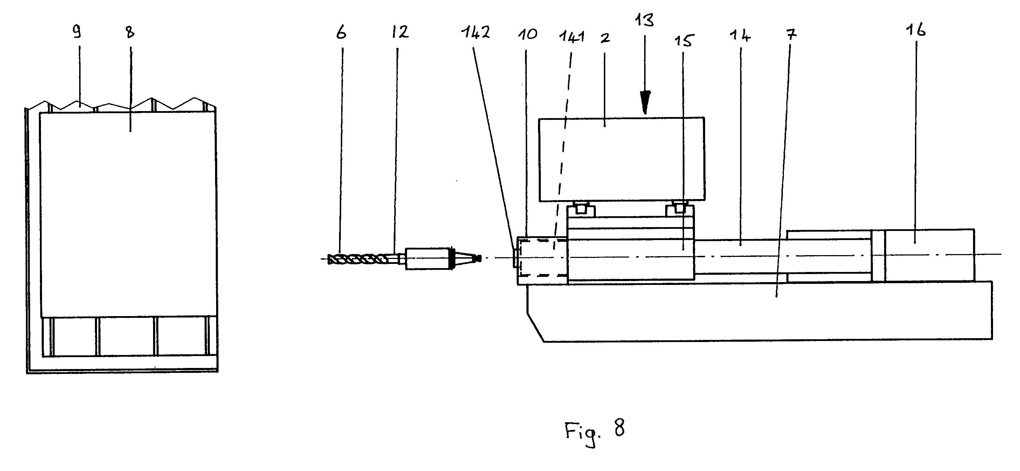

Die Anordnung der erfindungsgemäßen Tieflochbohrmaschine 13 zum Einsatz eines Fräs-Werkzeuges oder eines "normalen", kurzen Bohrers ist in den Figuren 8 bis 10 gezeigt. Dazu wurde/n aus dem Aufnahmelager 10 das/die eingesetzte/n Bauelement/e entfernt und der Schlitten 7 so weit gegenüber der Pinole 14 verfahren, daß das Ende der Pinole 141 mit der das Fräs-Werkzeug 12 aufnehmenden Spindel 142 in die nun freie Bohrung des Aufnahmelagers derart ein- und diese ggf. durchtaucht. Das Fräs-Werkzeug 12 oder der kurze Bohrer können dann, wie bei einer herkömmlichen Werkzeugmaschine, in die Spanneinrichtung der Spindel 142 eingesetzt werden.

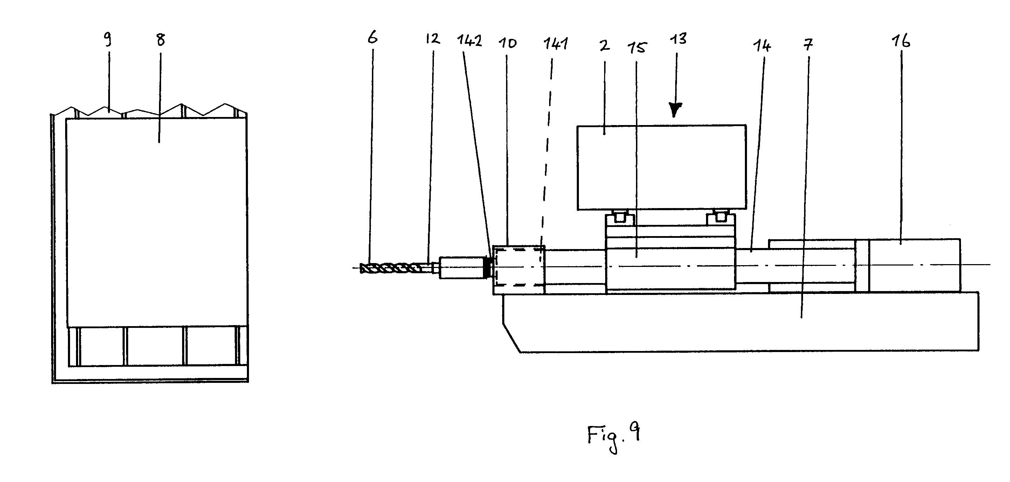

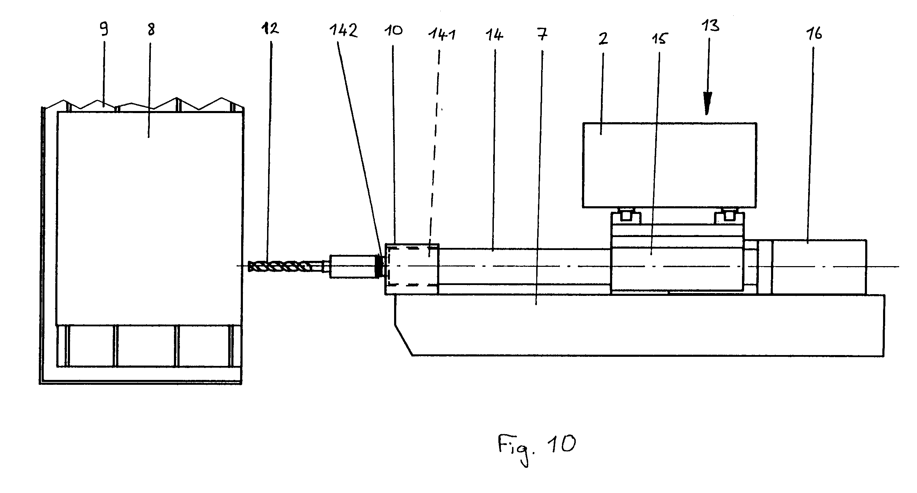

Bei dieser Anordnung bleibt, wie in den Figuren 9 und 10 gezeigt, das Aufnahmelager 10 beim Vorschub des Werkzeuges fest am Endteil der Pinole 10, so daß sich der Schlitten 7 zusammen mit der Pinole gegenüber dem Pinolenstocks verschiebt.

Aus der obigen Beschreibung wird klar, daß das Aufnahmelager 10 samt dem als Schlitten 7 gebildeten Arm eine Einheit bildet, die in beiden Ausführungsbeispielen gleich bleibt. Es wird daher ersichtlich, daß ein derart verfahrbares Aufnahmelager 10 auch separat als Einheit hergestellt und zum Nachrüsten von spanabhebenden Werkzeugmaschinen durch einfaches Anbringen auf dem Spindel- bzw. Pinolenstock geliefert werden kann.

## Patentansprüche

1. Spanabhebende Werkzeugmaschine zum mechanischen Bearbeiten von Werkstücken, durch Tieflochbohren, Fräsen, Bohren, Gewindeschneiden, Reiben od.dgl., umfassend eine über eine Spanneinrichtung ein Werkzeug (6,11,12) direkt und/oder indirekt aufnehmende, in einem Spindelstock (4, 14) gelagerte Spindel (42, 142) und ein Aufnahmelager (10) mit einer Bohrung für einen darin einsetzbaren Bohrbuchsenhalter mit Bohrbuchse (101) und/oder eine Späneschleuse (102), **dadurch gekennzeichnet,** daß das Aufnahmelager (10) parallel zum Bearbeitungsvorschub und mindestens teilweise über die Spanneinrichtung der Spindel (42, 142) verfahrbar ausgebildet ist derart, daß die Spanneinrichtung die Bohrung des Aufnahmelagers (10) mindestens teilweise durchtaucht.

2. Werkzeugmaschine nach Anspruch 1, **dadurch gekennzeichnet,** daß das Aufnahmelager (10) mindestens teilweise über einen werkstückseitigen Endbereich (41, 141) des Spindelstocks (4, 14) verfahrbar ausgebildet ist.

3. Werkzeugmaschine nach Anspruche 1 oder 2, , **dadurch gekennzeichnet,** daß das Aufnahmelager (10) im werkstückseitigen Endbereich eines parallel zum Bearbeitungsvorschub verfahrbar gelagerten Schlittens (7) angeordnet ist.

4. Werkzeugmaschine nach einem der Ansprüche 1 bis 3, **dadurch gekennzeichnet,** daß der Spindelstock (4, 14) vertikal verfahrbar auf einem auf einem Maschinengestell angeordneten Turm (2) angeordnet ist.

5. Werkzeugmaschine nach einem der Ansprüche 1 bis 4, **dadurch gekennzeichnet,** daß der Turm (2), den Bearbeitungsvorschub realisierend, in Richtung der Achse des Werkzeuges (6) verschiebbar mit dem Maschinengestell (3) wirkverbunden ist.

6. Werkzeugmaschine nach Anspruch 5, **dadurch gekennzeichnet,** daß der Turm (2) als Portal ausgebildet ist, in dessen Mittenbereich der Spindelstock (4) mit dem Schlitten (7) vertikal verfahrbar angeordnet ist.

7. Werkzeugmaschine nach einem der Ansprüche 1 bis 4, **dadurch gekennzeichnet,** daß der Spindelstock als in einem Pinolenstock (15) gelagerte Pinole (14) ausgebildet ist, wobei das werkstückseitige Endteil der Pinole (141) mindestens teilweise durch die Bohrung des Aufnahmelagers (10) hindurchtauchen kann.

8. Werkzeugmaschine nach einem der Ansprüche 1 bis 7, **dadurch gekennzeichnet,** daß sie als Koordinaten-Tieflochbohrmaschine ausgebildet ist.

9. Bohrbuchsenträgermittel zur Verwendung in einer einen Spindelstock (4, 14) und eine Spindel (42, 142) mit Spanneinrichtung umfassenden spanabhebenden Werkzeugmaschine, umfassend ein Aufnahmelager (10) zur Aufnahme eines Bohrbuchsenhalters mit Bohrbuchse (101) und/oder einer Späneschleuse (102) sowie einen Schlitten (7), wobei das Aufnahmelager (10) im Endbereich des Schlittens (7) angeordnet ist, **dadurch gekennzeichnet,** daß der Schlitten (7) derart an der Werkzeugmaschine anbringbar ist, daß das Aufnahmelager parallel zum Bearbeitungsvorschub über die Spanneinrichtung der Spindel (42, 142) hinweg verfahrbar ist, so daß die Spanneinrichtung das Aufnahmelager mindestens teilweise durchtaucht.

10. Bohrbuchsenträgermittel nach Anspruch 9, **dadurch gekennzeichnet,** daß das Aufnahmelager eine Bohrung mit einem Durchmesser umfaßt, der größer als der Durchmesser des werkstückseitigen Endbereiches eines Spindelstocks (4, 14) ist.

## Claims

1. Cutting machine tool for mechanically machining work pieces by deep hole drilling, milling, drilling, thread-cutting, reaming or the like, comprising a spindle (42, 142) that receives a tool (6, 11, 12) either directly and/or indirectly by means of a chucking device and is mounted in a spindle head (4, 14) and a bearing seat (10) with a bore hole for a drill bush holder with drill bush (101) and/or chip lock (102), the drill bush holder being insertable in the bearing seat, characterised in that the bearing seat (10) is adapted to be driven parallel to the working advance and at least partially over the chucking device of the spindle (42, 142) such that the chucking device at least partially penetrates through the bore hole of the bearing seat (10).

2. Machine tool according to claim 1, characterised in that the bearing seat (10) is adapted to be driven at least partially over a work piece side end region (41, 141) of the spindle head (4, 14).

3. Machine tool according to claim 1 or 2, characterized in that the bearing seat (10) is arranged in the work piece si,de end region of a slide (7) that is mounted to be driven parallel to the working advance.

4. Machine tool according to one of claims 1 to 3, characterized in that the spindle head (4, 14) is arranged to be driven vertically on a tower (2) disposed in a machine frame.

5. Machine tool according to one of claims 1 to 4, characterized in that the tower (2) is operatively connected with the machine frame (3) to be slidable in the direction of the tool (6) axis to implement the working advance.

6. Machine tool according to claim 5, characterized in that the tower (2) is formed as a portal in the middle area of which the spindle head (4) is arranged with the slide (7) to be vertically driven.

7. Machine tool according to one of claims 1 to 4, characterized in that the spindle head is formed as a sleeve (14) mounted in a sleeve head (15), the work piece side end portion of the sleeve (141) being capable of penetrating at least partially through the bore hold of the bearing seat (10).

8. Machine tool according to one of claims 1 to 7, characterized in that it is formed as a jig deep bore machine.

9. Drill bush holding means for use in a cutting machine tool that comprises a spindle head (4, 14) and spindle (42, 142) with chucking device, comprising a bearing seat (10) for receiving a drill bush holder with drill bush (101) and/or a chip lock (102) as well as a slide (7), the bearing seat (10) being arranged in the end region of the slide (7), characterized in that the slide (7) can be mounted on the machine tool such that the bearing seat can be driven parallel to the working advance over the chucking device of the spindle (42, 142) so that the chucking device at least partially penetrates through the bearing seat.

10. Drill bush holding means according to claim 9, characterised in that the bearing seat comprises a bore hole with a diameter that is larger than the diameter of the work piece side end region of a spindle head (4, 14).

## Revendications

1. Machine-outil travaillant par enlèvement de copeaux, destinée à l'usinage mécanique de pièces par forage et alésage de trous profonds, fraisage, perçage, taraudage, alésage ou analogues, comportant une broche (42, 142), portant directement et/ou indirectement, par l'intermédiaire d'un dispositif de serrage, un outil (6, 11, 12), et logée dans une poupée fixe (4, 14), et un palier de fixation (10), comportant un trou destiné à un porte-canon de perçage; pouvant y être inséré et portant un canon de perçage (101) et/ou un sas à copeaux (102), caractérisé en ce que le palier de fixation (10) est conçu de façon à pouvoir se déplacer parallèlement à la direction d'avance de l'usinage et au moins partiellement par l'intermédiaire du dispositif de serrage de la broche (42, 142), de façon que le dispositif de serrage pénètre au moins en partie dans le trou du palier de fixation (10).

2. Machine-outil selon la revendication 1, caractérisée en ce que le palier de fixation (10) est conçu de façon à pouvoir se déplacer au moins partiellement sur une zone en bout (41, 141), côté pièce, de la poupée fixe (4, 14).

3. Machine-outil selon la revendication 1 ou 2, caractérisée en ce que le palier de fixation (10) est disposé dans la zone en bout, côté pièce, d'un coulisseau (7) logé de façon à pouvoir se déplacer parallèlement à la direction d'avance de l'usinage.

4. Machine-outil selon l'une des revendications 1 à 3, caractérisée en ce que la poupée fixe (4, 14) est disposée de façon à pouvoir se déplacer verticalement sur une tour (2) disposée sur un bâti de la machine.

5. Machine-outil selon l'une des revendications 1 à 4, caractérisée en ce que la tour (2), qui réalise l'avance d'usinage, est reliée d'une manière fonctionnelle au bâti de machine (3) en pouvant se déplacer dans la direction de l'axe de l'outil (6).

6. Machine-outil selon la revendication 5, caractérisée en ce que la tour (2) est configurée comme un portique, dans la zone centrale duquel la poupée fixe (4), portant le coulisseau (7), est disposée de façon à pouvoir subir un déplacement vertical.

7. Machine-outil selon l'une des revendications 1 à 4, caractérisée en ce que la poupée fixe est configurée comme un fourreau (14) logé dans un porte-fourreau (15), la partie en bout, côté pièce, des fourreaux (141) pouvant pénétrer au moins en partie dans le trou aménagé dans le palier de fixation (10).

8. Machine-outil selon l'une des revendications 1 à 7, caractérisé e ce qu'elle est configurée comme une machine à forer et percer des trous profonds en coordonnées.

9. Organe-support pour canon de perçage, destiné à être utilisé dans une machine-outil travaillant par enlèvement de copeaux, qui comporte une poupée fixe (4, 14) et une broche (42, 142) comportant un dispositif de serrage, l'organe comportant un palier de fixation (10) destiné à loger un porte-canon de perçage, muni d'un canon de perçage (101) et/ou d'un sas à copeaux (102), ainsi qu'un coulisseau (7), le palier de fixation (10) étant disposé dans la zone en bout du coulisseau (7), caractérisé en ce que le coulisseau (7) peut être rapporté à la machine-outil de telle sorte que le palier de fixation puisse se déplacer parallèlement à la direction d'avance de l'usinage, grâce au dispositif de serrage de la broche (42, 142), de façon que le dispositif de serrage traverse au moins partiellement le palier de fixation.

10. Organe-support pour canon de perçage selon la revendication 9, caractérisé en ce que le palier de fixation comporte un trou dont le diamètre est supérieur au diamètre de la zone en bout, côté pièce, d'une poupée fixe (4, 14).
